# EUROPEAN PATENT APPLICATION

(11) **EP 1 267 552 A2**
(43) Date of publication of application: **18.12.2002**
(21) Application number: 02396091.7
(22) Date of filing: 17.06.2002
(51) Int. Cl.: H04L 29/06, H04L 12/24

(54) **Method and arrangement for managing services and devices in a data network**

(30) Priority: 15.06.2001 FI 20011273
(71) Applicant: Wts Wireless Technology Systems Oy, 40500 Jyväskylä (FI)
(72) Inventor: Liuska, Kari, 40800 Vaajakoski (FI); Rantamäki, Anssi, 40520 Jyväskylä (FI)
(74) Representative: Brax, Matti Juhani

(57) **Abstract**

The invention relates to a method for managing devices and services offered through said devices in a data network. The devices use administrative information recorded in connection thereof in order to offer services in a selective way. In the method, there is formed a message (301) containing administrative information, which message is converted to a transmittable transmission-form (302) and distributed in said transmission-form through the data network (303, 304) to those target devices that contain administrative information related to the message in question. The received message meant for each target device is converted into a form where the administrative information contained in the message is compatible and recordable in connection with said target device (305). The compatible administrative information is recorded in connection with the target device (306) and it is used for realizing the selection that said target device uses in order to offer services.

## Description

The method and arrangement according to the invention is used for managing in a centralized way a certain scattered group of services offered in a data network and active devices arranged in the data network. In particular, the managing mechanism according to the method and arrangement of the invention is easily adapted to the changing needs of the data network.

Service providers and network operators are expected to offer efficient and reliable applications for the use of business enterprises. Teleoperators and service providers have a continuous need to increase their network services for end users. Often the product or solution for realizing a service originates from a third party; examples are for instance firewall, FW, remote access, RA, authentication or a virtual private network, VPN. When these services are adapted to the network of an operator and/or of an end user, they are made suitable for the system by adapting one service and device at a time. This means that the service provider adapts each product separately to his own system, and thus individual solutions do not support other solutions used in the same network. The fact that the services are managed separately also makes it more complicated to deliver services and take care of clients. As the number of new services and clients keeps increasing, this kind of pattern of operations is useless, because sooner or later the number of processable matters rises too high, and the operation becomes ineffective.

The number of various devices to be managed is high, starting from computer servers and connected databases to various routing devices. All of these devices are connected to a data network that is owned by one or several network operators, end users and/or service providers. Larger private enterprises and public organizations also have internal data networks containing similar services. Management means adding, changing, removing and controlling data and parameters connected to the operation of the data network or to the operation of services offered in the data network.

Generally the task of data management belongs to the owner of the data network. When for instance a new user should be added to a service, the network operator must add the user information separately to each network element or database in order to make said service available for the new user. When the user information changes, it must be updated separately in several different locations.

There have been attempts to solve the problem for example by collecting the users in a centralized database. Thus all the user information is gathered in one place at the disposal of the application and service programs. However, the updated database must be available for all service providing systems, and the information contained in the database is not transmitted if the employed server does not use exactly said database. In addition, a problem with a centralized database is that the information contained therein can be updated in a data processing program. However, the information is not updated in the database itself, but the updating only results in one or several random changes in a given application. As a consequence, the information does not remain in a uniform format, but the same information has different value in different locations.

The object of the invention is to update information and perform other data management tasks reliably in each device and application of the data network. Another object of the invention is a flexible system that can be extended in a simple fashion when the number of users and/or services increases. Yet another object of the invention is to manage the services produced by several different service providers in a uniform way, according to a defined management concept.

The object is achieved by performing the data management directly in each target containing changed or new information through management applications and user interfaces.

The invention is characterized by what is set forth in the characterizing part of the independent claims. Preferred embodiments of the invention are described in the dependent claims.

According to the invention, a user interface is created for each application and service of the data network, and all necessary information is updated through said user interface. This means that there is created a user interface (layer) for managing the units and services of a given data network. The information can be scattered, i.e. each unit of the data network contains the necessary information, and it is not necessary to have a separate database at all. The data to be managed is not put to any intermediate storage, but it is brought directly to each active device and converted into the format required by a given server or application by means of a user interface. The created user interface is also used for updating data in the system in each device and/or database where changing data is located. Through said user interface, the information is transmitted to each changing unit, and the data traffic in the user interface can be observed.

By means of the management application and user interfaces according to the invention, various server, terminal and/or database units can be managed in a centralized way for instance by means of a user-friendly graphic user interface. For the party who manages and controls the units and services, the whole system is presented on a graphic display. The manager can operate on the display, i.e. add services or change their properties for a certain unit. In addition, it is possible to observe the operations, for example the transmission of a message, in real-time. This type of management solution supports business processes and client management, and the service delivery times become essentially shorter. Moreover, as the process management becomes easier, the probability of errors is reduced, and the proceeding of a simpler delivery process is easier to predict.

By means of the present invention, it is possible to reach a desired number of services of various different manufacturers, active network devices, data systems and databases. Consequently, it is not necessary to renew existing products or adapt them to a given network, but they function as such, as separate, independent units. By means of the management application and user interface according to the invention, various units and services of the data network are managed and maintained, and devices in a network controlled by a given operator are interconnected. Services are reached without interrupting the active service, because the so-called client-client architecture of the present invention does not require any changes in the existing network. According to the invention, the client applications constituting the user interface take care of transmitting messages between the terminal units and of collecting the necessary information in the data network. Thus the services offered for both the user and the service provider can be managed in a centralized way. The user interface offered to the user can be based on forms, or it may be a graphic representation of the data network. The management application according to the invention is a partly user-specific solution, depending in each case on the number and quality of the services and user interfaces to be managed.

The invention is explained in more detail below, with reference to the appended drawings, where
figure 1 illustrates a preferred embodiment of the invention,
figure 2 illustrates another preferred embodiment of the invention, and
figure 3 illustrates the operation of a preferred embodiment of the invention.

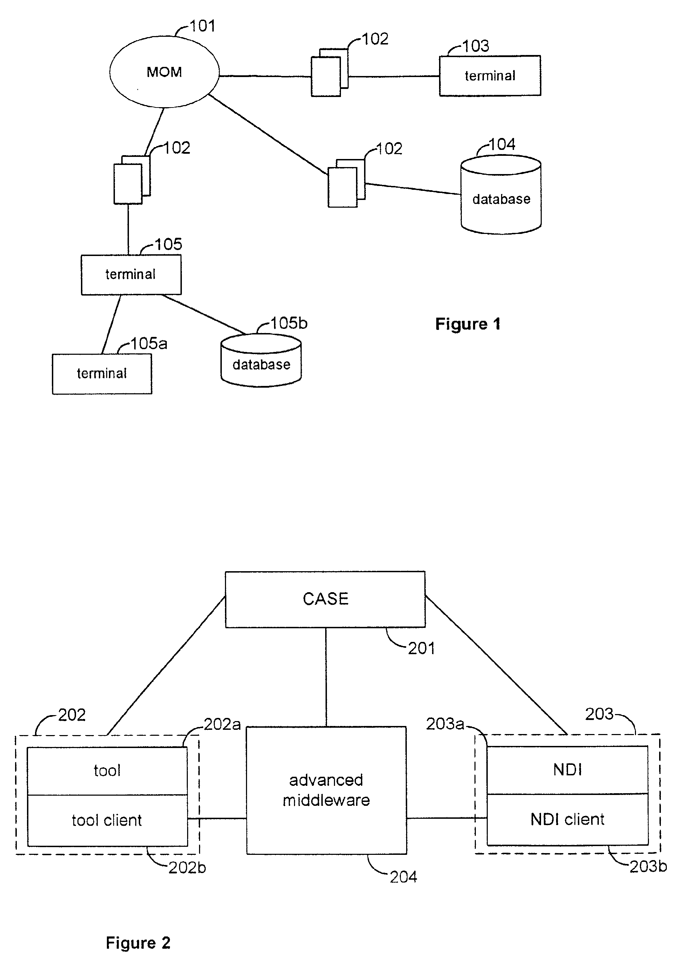

Figure 1 is a general illustration of the operation of the system according to the invention. The management applications and user interfaces illustrated in figure 1 are created by means of the client applications 102 in a desired data network or in an administrative part of a given data network. By using a client-type solution as the connecting party, there is achieved the advantage that the standard connections to other systems and applications can be maintained. The client application 102 can be realized for instance as a description in the XML (Extensible Markup Language). The client application can be for instance a network device interface NDI or an application programmable interface API.

Figure 1 illustrates a so-called message oriented type of middleware, MOM, 101 to control the service network in a centralized way and to connect all services of a given operator to form one administrative entity. The functionality of the middleware is based on network device specific, distributed client applications that are connected to the network services. The middleware 101 takes care of data transmission, of what is transmitted and where. The necessary information is defined in a separate data structure. In practice, the old data can be looked up to be observed, and it is possible for instance to modify or delete the old data or to add completely new data. The modified, new data is stored for example in a given memory location, parameter table or database, from where the system is able to utilize it.

All of the units of the administrative entity are interconnected by means of a single service specific component, a so-called client application 102 according to the invention. Also the controlling tools are connected to the system by means of their own client applications 102, and they discuss with the other servers and applications through the middleware 101. In fig 1, the control tool could be for instance the terminal 103, from the feed device of which the user could modify any piece of information or feature in the network.

The client application 102 converts the message received from the middleware 101 into a form where the terminal 103, 104, 105 can process the message. Then the client application 102 initiates a connection request to the terminal 103, 104, 105 in question, and when the connection is established, the client application 102 transmits the message to the terminal 103, 104, 105. If the message comes from the terminal 103, 104, 105 to the client application 102, the client application 102 can receive the message in a format transmitted by the respective terminal 103, 104, 105. Thereafter the client application 102 converts the message into a message transmission format required by the middleware 101 or generally to a given message transmission format. All descriptions and data structures can be converted to a format where they can be utilized, processed and transmitted further in data networks. The message oriented middleware (MOM) 101 multiplies the message and transmits it to every client application 102 with a terminal 103, 104, 105 to which the performed change is related.

Figure 1 is an exemplary illustration of possible terminal units that can be managed by means of the arrangement according to the invention. The client application 102 can be created between the middleware 101 and a given terminal 103. The employed terminals 103 in the network can be for instance a computer, a router or a server. In addition, the client application 102 can take care of the connection and communication between the middleware 101 and a database 104. The data contained in the database 104 can be looked up and modified by means of the client application 102. At the same time the client application 102 takes care that when the data contained in the database 104 changes, it also is updated to other locations where the changed data is placed. The data format of the database is of no importance with respect to the invention, i.e. it can be any known data format. The client application 102 can connect the middleware 101 also to the terminal 105, which is connected to other terminals 105a and databases 105b. The described terminal 105 can be for example the central unit of a local area network. In the embodiment of figure 1, the client application 102 takes care that the data is transmitted in a correct form to the terminal 103, to the database 104 and to the terminal 105, which further transmits the data to its sub-devices according to a known method typical of said local area network.

Let us observe a solution according to another preferred embodiment, where the system according to the invention is utilized when the operator offers its business clients services containing a protected connection between several local area networks (LAN), through a firewall and with a quality of service (QoS) chosen by the client.

Figure 2 illustrates the main elements in a system according to another preferred embodiment, said elements being an advanced middleware 204, a tool module 202 and a network device interface (NDI) module 203. In addition, a preferred embodiment of the invention includes a design tool, a so-called CASE (Computer Aided Software Engineering) tool 201, whereby the properties and functionalities of the operator's data network can be defined. The CASE tool 201 produces the required description of the programs, the configuration information, the service network description and the documentation of the system of the service provider or the network operator. By means of the CASE tool 201, there are designed and defined management and user interfaces of a given multiservice network as well as client-specific applications. It is a development tool for representing the multiservice network in question and for carrying out the management solutions. To the CASE tool 201, there is connected an object library and classes in order to make sure that the management and user interfaces of the network to be created are realized by using real and defined components. Consequently, by means of said design tool, there can only be designed systems that are functional and that have really existing components.

The tool module 202 contains various environments and means 202a, each of which has an own client application, i.e. client 202b that forms an interface between the application 202a proper and the advanced middleware 204. Said environments 202a can be for instance the user interface of the end user, the interface of the operator or the interface of the main user of the system.

Said user interfaces mean a basic solution for creating the client's user interface. The user's user interface can be client-specific or even user-specific, in which case the user interface is modified to conform to the preferences of each user. The user's user interface can be produced for instance as a Java language solution used over the Internet, or as a Windows-based application. The user's view is a graphic illustration of the basic structure of the service. Management operations can be activated by means of icons, and the graphic image also shows the current state of the network and services. Thus the view on the user's display is a real-time illustration of the services and management operations. In a known fashion, for example by clicking with a mouse or by pointing with a display pen, the user can control and manage the system within the scope of his predetermined rights of usage.

Let us assume that a client orders a firewall service to his office. In the service image he sees his order, the phase of the delivery process and the state of readiness of the firewall. If the client wishes for instance to modify the speed - or Qos, quality of service, between two offices, he can perform all necessary operations only by clicking the service icon. This icon opens a window provided with the necessary fields for modifying the function. The service provider controls the licensed operations, i.e. checks that the data is modified only by those who have authorization to do that.

The operator's user interface is used for managing the operation and properties of the system. The basic architecture is fairly similar to the user's user interface. The biggest difference is that by means of the functions of the operator's user interface, all services and connected data can be managed. In the operator's user interface, there can be defined various different user rights: for example, some users can only be given a right to read the data.

The user interface of the main user of the system, i.e. of the system manager, is composed of so-called database windows that represent the data and the property tables. These are used for technical or administrative purposes.

The network device interface NDI 203 illustrated in figure 2 comprises separate programs or device interfaces 203a controlled by the central unit or the middleware, and of a client 203b of each module. The client 203b takes care of connections between the network device interface 203a and the advanced middleware 204. Said network device interfaces 203a can be various process or service programs. Services by a third party, i.e. separate databases and network devices, are also connected to the service network through various application-specific management interfaces, i.e. client applications. The controlling tool/tools are connected to the system through specific, single client applications. Said tools communicate with other services by means of the client applications through a middleware. Consequently, this kind of architecture is called client-client architecture (cf. known client-server architecture). The described client-client structure does not include a centralized server but only active client applications that communicate with each other.

Let us further observe various network interface modules 203. One group of said network interface modules 203 constitutes services added to the basic structure, including for instance a descriptive application realizing a graphic view of the network, an automated task or function control application and quality of service applications. The descriptive application illustrates the current state of the network service. Thus both the client and the service provider's staff can observe the state of the services offered in the data network in real-time. The program employed by the user of the tools, i.e. the client, the operator or the system manager, is a graphic description of the services, where the user can open the data page of a given service by clicking an icon.

The quality of service application includes means for managing the network access in a network applying the Internet protocol. A quality of service application is meant for instance for end users with several offices that need different qualities, perhaps even on an alternating basis. Among the modifiable factors, let us point out for example quality of service, speed, used bandwidth, degree of protection and so on. Both the operator and the end user have at their disposal a simple management program for modifying these features.

A message monitor server is used for monitoring the transmission of messages and data. It can be used for instance for following the process of an updating operation in the data network. The necessary information is collected and transmitted to those units in the data network where the changes are directed to. When necessary, the message monitor also makes backup copies.

As yet another example of the network device interface module 203, the system can be provided with external applications that in practice are generally servers or databases. These are connected to the administrative arrangement according to the invention by means of their individual client applications in similar fashion as other modules. External services can, according to what is agreed upon, be managed either by the service user or by the service provider.

A preferred embodiment of the invention is based on messages that the tool clients 202b and the network device interface clients 203b send to each other. The advanced middleware 204 controls the messages. The messages may be any data in text- or binary form. The advanced middleware 204 is provided with a special message transmission unit that takes care of the communication between the various client applications by transmitting the messages to the correct receivers. In addition, this message transmission unit takes care of the authentication of the control tool and of the authorization of the users, as well as of the network device interface clients. The message transmission unit does not process data, it only sends the data further to the target client. The business logic of the data parts and commands of each message is processed in the receiving client. The advanced middleware 204 itself only processes administrative messages whereby the system proper is configured.

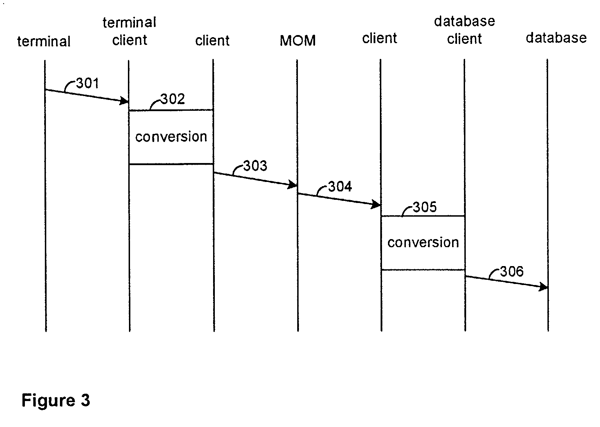

Figure 3 illustrates the operation of the system according to a preferred embodiment of the invention. The passage of information in the system according to the invention is described by means of arrows. In this exemplary case, the user has a terminal and it is assumed that he is modifying his address data. In this data network, the user information is placed locally in the memory of his own terminal, as well as for example in a register maintained by his employer in a database of the network.

First the user modifies his address information in his own terminal. The information is modified in the memory of the terminal when the user saves the changes, and the client application of the terminal also receives information of the modified data 301. Here the client application is illustrated as a network device interface with two parts: the first part is a standard interface from the message transmission program to the user's client interface. The second part is a hardware-specific interface to the terminal (the terminal client, the database client). The connection to the terminal (301, 306) can be made for instance by means of the following connection practices or protocol configurations: SQL (Structured Query Language), Radius (Remote Authentication Dial In User Service), LDAP (Lightweight Directory Access Protocol), SSH (Single Secure Shell), Telnet or API (Application Programmable Interface).

Next the first part (client) of the client application of the terminal converts the message into a generic form 302, where it can be transmitted to the central unit. The second part (terminal client) of the client application transmits the request for connection to the central unit MOM 303 and transmits the message through the established connection. MOM arranges the messages in a tree structure that describes the service network to be managed. The message transmission unit of the central unit MOM takes care that this message is transmitted to all such targets in the data network that contain modified data. The message transmission unit does not know anything of the contents of the message proper. The message transmission unit identifies the device that served as the transmitter of the message (authentication), accepts the user, possibly by means of a secret code (authorization) and transmits the message further to the receiving client applications (client). Now the modified data is also located in the database maintained by the employer, and consequently the message transmission unit of the central unit is able to send the modification message to the client 304 of the client application of this database.

At step 304, the modification message can be sent to several target clients, if the modified data is located in several different locations in the data network. The modified data can be placed for example in the memory, register or table of a device located in the network. For the sake of clarity, in this example we only observe a modification in one of the databases in the network. The message received by the client application is converted, 305, into a form where the terminal - which in this example is a database - processes it. The client application on the side of the database initiates a request for connection to the database and transmits the message through a connection made to said database 306. Thus the address information that the user modified in his own terminal has been updated in the correct format also in the employer's central database.

According to another alternative, the client application who can add messages to the message tree structure formed by the message transmission program notifies the receiving client applications that said message can be looked up on the server of the transmitting program.

## Claims

1. A method for managing devices and services offered through the devices in a data network where the devices use administrative data recorded in connection thereof in order to offer services in a selective way, **characterized in that** the method comprises steps of:
- forming a message (301) containing administrative data,
- converting the message containing administrative data into a transmittable transmission-form (302),
- distributing the transmission-formed message containing administrative data through the data network (303, 304) to the target devices including administrative data recorded in connenction thereof and related to the message,
- converting a received message meant for each target device to a form where the administrative data contained by the message is compatible and recordable in connection with a certain target device (305),
- recording the compatible administrative data in connection with the target device (306) and
- using the recorded administrative data for realizing the selection that the target device executes in order to offer services.

2. A method according to claim 1, **characterized in that** it comprises a step of creating device-specific client applications (102, 202b, 203b), that are in connection to a given advanced middleware (101, 204), for managing the devices and the services offered through the devices in the data network.

3. A method according to claim 2, **characterized in that** it comprises a step of converting the message containing administrative data by means of client applications (102, 202b, 203b) into the transmission-form where it is further transmitted to the advanced middleware (101, 204).

4. A method according to claim 2, **characterized in that** it comprises a step of distributing the transmission-formed message containing administrative data by intermediation of a message transmission unit of the advanced middleware (204), to the target devices (203) including administrative data recorded in connection thereof, and related to the message.

5. A method according to claim 2, **characterized in that** it comprises a step of converting a received message in each target device, by means of the client application (102, 203b, 305) of the target device into a form where the administrative data contained in the message is compatible and recordable in connection with the target device (306).

6. An arrangement for managing devices and services offered through the devices in a data network, where the administrative data, recorded in connection with the devices, for offering services is used in a selective way, **characterized in that** the arrangement comprises
- means for establishing messages containing administrative data (301),
- means for converting messages containing administrative data into a transmittable transmission-form (102, 202b, 203b, 302),
- means for distributing the transmission-formed messages containing administrative data through the data network (101, 204) to the target devices including administrative data recorded in connection thereof and related to the message,
- means for converting a received message in each target device (102, 202b, 203b, 305) into a form where the administrative data contained in the message is compatible and recordable in connection with said target device,
- means for recording the compatible administrative data in connection with the target device (306) and
- means for using the recorded administrative data in order to realize the selection that the target device executes in order to offer services.

7. An arrangement according to claim 6, **characterized in that** it includes client applications (102), an advanced middleware (101, 204) and devices, and that services offered by intermediation thereof are arranged to be managed in a data network by means of device-specific client applications (102) that are in connection to the advanced middleware (101, 204) of the arrangement.

8. An arrangement according to claim 7, **characterized in that** the arrangement includes client applications (102, 202b, 203b) in order to convert a message containing administrative data into the transmittable transmission-form (302) where it can be further transmitted to the advanced middleware (101, 204).

9. An arrangement according claim 7, **characterized in that** the advanced middleware (101, 204) of the arrangement includes a message transmission unit in order to transmit the transmission-formed message containing administrative data, in the data network, to the target devices (304) including administrative data recorded in connection thereof, and related to the message.

10. An arrangement according to claim 7, **characterized in that** the arrangement includes device-specific client applications (102, 202b, 203b) in order to convert the message in transmissible transmission-form in the target device into a form (305) where the administrative data contained in the message is compatible and recordable in connection with the target device.
